# EUROPEAN PATENT APPLICATION

(11) **EP 4 852 352 A1**
(43) Date of publication of application: **09.12.2026**
(21) Application number: 24935845.8
(22) Date of filing: 10.07.2024
(51) Int. Cl.: H04J 11/00, G01S 7/292

(54) **SIGNAL IDENTIFICATION DEVICE, SIGNAL SUPPRESSION DEVICE, SIGNAL IDENTIFICATION AND SUPPRESSION DEVICE, PARAMETER IDENTIFICATION METHOD, PARAMETER IDENTIFICATION PROGRAM, AND RECORDING MEDIUM**

(30) Priority: 15.04.2024 JP 2024065064
(71) Applicant: Mitsubishi Electric Corporation, Tokyo 100-8310 (JP)
(72) Inventor: FUNAKI, Nobutaka, Tokyo 100-8310 (JP); TERADA, Tsubasa, Tokyo 100-8310 (JP)
(74) Representative: Pfenning, Meinig & Partner mbB
(86) International application number: PCT/JP2024/024862
(87) International publication number: WO 2025/220245

(57) **Abstract**

A signal identification device (1) includes: a sweep period estimating unit (12a) to estimate a sweep period in which a sweep of a linear frequency modulation (LFM) wave in a digital reception signal is repeated, the digital reception signal being obtained by converting an incoming wave including the linear frequency modulation (LFM) wave into a digital signal; a chirp rate estimating unit (12b) to estimate a chirp rate that is a rate of change in frequency of the LFM wave in the digital reception signal; and an initial frequency estimating unit (12c) to estimate an initial frequency of the LFM wave in the digital reception signal.

## Description

### TECHNICAL FIELD

The present disclosure relates to a signal identification device, a signal suppression device, a signal identification and suppression device, a parameter identification method, a parameter identification program, and a recording medium.

### BACKGROUND ART

In the wireless communication field, a linear frequency modulation (LFM) signal also known as a chirp signal is often used, and the accuracy and speed of parameter estimation for the chirp signal are very important. Non-Patent Literature 1 proposes highly accurate and high-speed parameter estimation.

The parameter estimation for the chirp signal proposed in Non-Patent Literature 1 is a method for first estimating the frequency of the chirp signal using a quadratic phase function (QPF), then estimating the transform order of fractional Fourier transform (FRFT) by a chirp rate, and acquiring the center frequency and amplitude of the chirp signal by FRFT.

### CITATION LIST

### NON-PATENT LITERATURE

Non-Patent Literature 1: Xuelian Liu, Jun Han, Chunyang Wang, Bo Xiao, "Parameters estimation for chirp signal based on QPF-FRFT," Optik, vol. 182, pp. 529-537, 2019.

### SUMMARY OF INVENTION

### TECHNICAL PROBLEM

The technique disclosed in Non-Patent Literature 1 is based on the premise that an LFM wave that is an incoming wave is one wave.

In addition, Non-Patent Literature 1 does not mention a case where the LFM wave has periodicity.

In a case where a plurality of LFM waves arrive as incoming waves and in a case where the LFM waves have periodicity, there is a problem that the technique disclosed in Non-Patent Literature 1 cannot estimate the parameters of the LFM waves in some cases.

The present disclosure has been made to solve the above problems, and an object of the present disclosure is to obtain a signal identification device capable of estimating a parameter of an LFM wave even in cases where a plurality of LFM waves arrive as incoming waves and the LFM waves have periodicity.

### SOLUTION TO PROBLEM

A signal identification device according to the present disclosure includes: a sweep period estimating unit to estimate a sweep period in which a sweep of a linear frequency modulation (LFM) wave in a digital reception signal is repeated, the digital reception signal being obtained by converting an incoming wave including the linear frequency modulation (LFM) wave into a digital signal; a chirp rate estimating unit to estimate a chirp rate that is a rate of change in frequency of the LFM wave in the digital reception signal; and an initial frequency estimating unit to estimate an initial frequency of the LFM wave in the digital reception signal.

### ADVANTAGEOUS EFFECTS OF INVENTION

According to the present disclosure, it is possible to estimate a parameter of an LFM wave even in cases where a plurality of LFM waves arrive as incoming waves and the LFM waves have periodicity.

### BRIEF DESCRIPTION OF DRAWINGS

FIG. 1 is a configuration diagram illustrating a signal identification device according to a first embodiment.
FIG. 2 is an explanatory diagram illustrating a definition of parameters of an LFM wave.
FIG. 3 is a hardware configuration diagram illustrating hardware of the signal identification device according to the first embodiment.
FIG. 4 is a flowchart illustrating a procedure of signal identification processing to be performed in the signal identification device according to the first embodiment.
FIG. 5 is a configuration diagram illustrating a signal identification and suppression device according to a second embodiment.
FIG. 6 is a flowchart illustrating a procedure of signal identification processing to be performed in the signal identification and suppression device according to the second embodiment.
FIG. 7 is a configuration diagram illustrating a signal identification and suppression device according to a third embodiment.
FIG. 8 is a flowchart illustrating a procedure of signal identification processing to be performed in the signal identification and suppression device according to the third embodiment.

### DESCRIPTION OF EMBODIMENTS

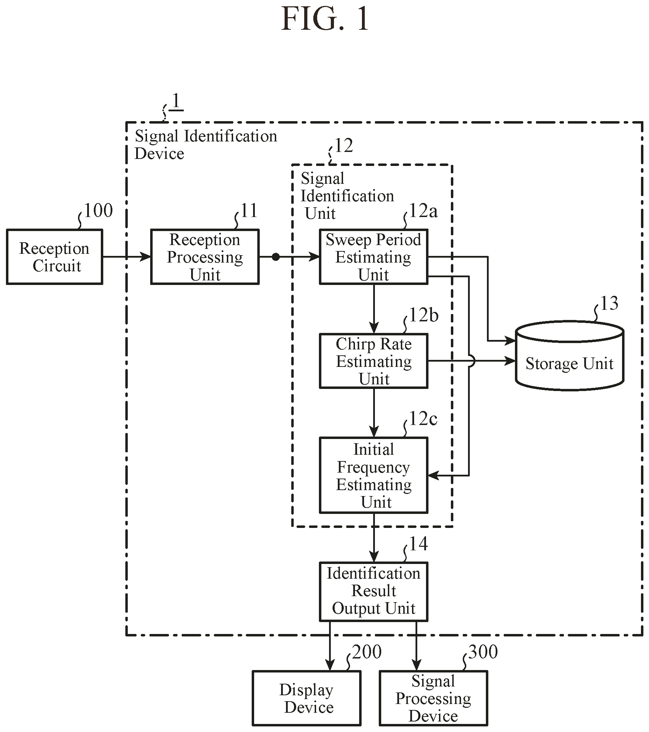

A signal identification device 1 according to a first embodiment will be described with reference to FIGS. 1 to 4.

The signal identification device 1 according to the first embodiment is a signal identification device that identifies a parameter of a linear frequency modulation (LFM) wave used in applications such as wireless communication, radar, and sonar.

The signal identification device 1 according to the first embodiment includes a reception processing unit 11, a signal identification unit 12, a storage unit 13, and an identification result output unit 14.

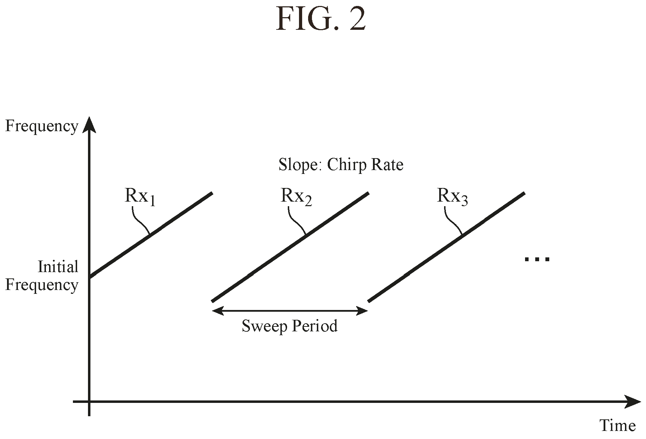

Prior to describing the signal identification device 1 according to the first embodiment, an LFM wave that is an incoming wave received by the signal identification device 1 will be described with reference to FIG. 2.

FIG. 2 illustrates an example in which the signal identification device 1 periodically receives a transmission wave including an LFM wave, which is a chirp signal whose frequency increases with time, as incoming waves Rx₁ to Rx₃ including LFM waves.

In the description of the embodiment, the parameters of the LFM wave are defined as follows.

Each of the incoming waves Rx₁ to Rx₃ is a chirp signal whose frequency increases with time, and a slope, that is, a rate of change in frequency with respect to time, is defined as a chirp rate.

Further, a reception interval of the incoming waves Rx₁ to Rx₃, that is, a reception period in which a frequency sweep is repeated, is defined as a sweep period.

The instantaneous frequency at the head of processing data by the incoming waves Rx₁ to Rx₃ is defined as an initial frequency.

In FIG. 2, three incoming waves Rx₁ to Rx₃ which are periodically received are illustrated as reference, but the number of incoming waves Rx₁ to Rx₃ is not limited to three.

The reception processing unit 11 acquires a digital reception signal obtained by converting, into a digital IQ signal, an analog signal based on the incoming waves Rx₁ to Rx₃ from a reception circuit 100 (see FIG. 1) that receives, using a sensor, a transmission wave including a radio wave or a sound wave including an LFM wave transmitted from a transmitter (not illustrated) as incoming waves Rx₁ to Rx₃.

The reception circuit 100 is constituted by a generally known reception circuit.

The digital reception signal output from the reception processing unit 11 may include an IQ signal based on an undesired LFM wave in addition to a desired IQ signal and noise, and the IQ signal based on the undesired LFM wave causes interference with the desired IQ signal.

The signal identification unit 12 estimates a sweep period of the LFM wave, a chirp rate of the LFM wave, and an initial frequency of the LFM wave in the digital reception signal from the reception processing unit 11.

The signal identification unit 12 includes a sweep period estimating unit 12a, a chirp rate estimating unit 12b, and an initial frequency estimating unit 12c.

The sweep period estimating unit 12a estimates a sweep period in which the sweep of the LFM wave in the digital reception signal from the reception processing unit 11 is repeated by one-dimensional searching, and acquires a sweep-period estimation value.

Further, the sweep period estimating unit 12a acquires a wave-number estimation value of the LFM wave in the digital reception signal from the reception processing unit 11.

The acquisition of the sweep-period estimation value by the sweep period estimating unit 12a, that is, the estimation of the sweep period, is performed as follows.

The sweep period estimating unit 12a extracts a digital signal with the number of samples N₀ from the digital reception signal (chirp signal) from the reception processing unit 11, and calculates an autocorrelation function of the digital signal with the number of samples N₀.

The sweep period estimating unit 12a one-dimensionally searches for a peak of the autocorrelation function, and acquires wave-number estimation values (symbol shown in (1) below; the wave-number estimation value is represented as "Nw^" in the following description) of the LFM wave included in the digital reception signal and sweep-period estimation values thereof (symbol shown in (2) and (3) below; the sweep-period estimation value is represented as "τᵢ^" in the following description).$\hat{{N}_{w}}$ (1) ${\hat{τ}}_{i}$ (2) ${\hat{τ}}_{i} \left(i=1,2,…,\hat{{N}_{w}}\right)$ (3)

The wave-number estimation value Nw^ and the sweep-period estimation value τᵢ^ acquired by the sweep period estimating unit 12a are stored in the storage unit 13.

When the wave-number estimation value Nw^ of the LFM wave acquired by the sweep period estimating unit 12a is zero, it is assumed that a plurality of LFM waves are not included as incoming waves and the LFM wave does not have periodicity.

The chirp rate estimating unit 12b estimates a chirp rate that is a rate of change in frequency of the LFM wave in the digital reception signal from the reception processing unit 11.

The chirp rate estimating unit 12b acquires the sweep-period estimation value τᵢ^ acquired by the sweep period estimating unit 12a, and acquires a chirp-rate estimation value of the LFM wave included in the digital reception signal from the reception processing unit 11 using the sweep-period estimation value τᵢ^.

The chirp rate estimating unit 12b acquires a chirp-rate estimation value for each wave number i (= 1, 2,..., Nw^) indicated by the wave-number estimation value Nw^ acquired by the sweep period estimating unit 12a.

The chirp rate estimating unit 12b estimates a chirp rate by using an extended autocorrelation function obtained by adding a phase correction term using the sweep-period estimation value τᵢ^ acquired by the sweep period estimating unit 12a.

The chirp rate estimating unit 12b first obtains an extended autocorrelation function Z_{L}[·] that is expressed by the following Expression (4) and that includes the sweep-period estimation value τᵢ^.${Z}_{L} \left[j\right] : = \frac{1}{{N}_{1}} {\sum }_{n = 0}^{{N}_{1} - 1} r \left[n\right] {r}^{∗} \left[n+L\right] {e}^{j 2 {πμ}_{j} {LnT}_{s}^{2} - 2 {πLT}_{s} {μ}_{j}} \left⌊\frac{{nT}_{s}}{{\hat{τ}}_{i}}\right⌋ {\hat{τ}}_{i}$ (4)

In Expression (4), N₁ represents the number of samples extracted from the digital reception signal from the reception processing unit 11, L represents the number of lag samples, µⱼ (j = 1, 2,..., N_{µ}) represents a candidate chirp rate, T_{S} represents a sampling period, and (·)* represents a complex conjugate.

The chirp rate estimating unit 12b calculates the extended autocorrelation function represented by Expression (4) for each candidate chirp rate µⱼ (j = 1, 2,..., N_{µ}), one-dimensionally searches for a peak of the calculated extended autocorrelation function Z_{L}[j], and acquires a chirp-rate estimation value of each LFM wave (symbol shown in (5) and (6) below; the chirp-rate estimation value is represented as "µᵢ^" in the following description).

The chirp-rate estimation value µᵢ^ acquired by the chirp rate estimating unit 12b is stored in the storage unit 13.${\hat{μ}}_{i}$ (5) ${\hat{μ}}_{i} \left(i=1,2,…,\hat{{N}_{w}}\right)$ (6)

The initial frequency estimating unit 12c estimates an initial frequency that is an instantaneous frequency at the head of the LFM wave in the digital reception signal.

The initial frequency estimating unit 12c acquires the sweep-period estimation value τᵢ^ acquired by the sweep period estimating unit 12a and the chirp-rate estimation value µᵢ^ acquired by the chirp rate estimating unit 12b, and estimates the initial frequency by using one-dimensional fractional Fourier transform (FRFT) using the sweep-period estimation value τᵢ^ and the chirp-rate estimation value µᵢ^.

First, the initial frequency estimating unit 12c converts the chirp-rate estimation value µᵢ^ into an FRFT order αᵢ by Expression (7) below that is a relational expression.${α}_{i} = {tan}^{- 1} \left(-\frac{1}{{\hat{μ}}_{i} {N}_{2} {T}_{s}^{2}}\right)$ (7)

In Expression (7), N₂ is the number of samples extracted from the digital reception signal from the reception processing unit 11, and may be the same as or different from the number of samples N₁.

Next, the initial frequency estimating unit 12c calculates FRFT expressed by Expression (8) below.$J \left({α}_{i}, u\right) = \sqrt{\frac{1 - j cot {α}_{i}}{{N}_{2}}} {\sum }_{n = - \frac{{N}_{2} - 1}{2}}^{\frac{{N}_{2} - 1}{2}} r \left[n\right] {e}^{j \left\{\frac{{πu}^{2} cot {α}_{i} - 2 un csc {α}_{i} + {n}^{2} cot {α}_{i}}{{N}_{2}}\right\}}$ (8)

It is to be noted that u in Expression (8) is an argument in the fractional Fourier domain (FRFD), and Expression (9) is established between u and the frequency f.$f = \frac{u csc α}{{N}_{2} {T}_{s}}$ (9)

The initial frequency estimating unit 12c one-dimensionally searches for a peak of the FRFT represented by Expression (8), and acquires an argument (symbol shown in (10) and (11) below; the argument is represented as "uᵢ^" in the following description). ${\hat{u}}_{i}$ (10) ${\hat{u}}_{i} \left(i=1,2,..,\hat{{N}_{w}}\right)$ (11)

Based on Expression (9), the argument uᵢ^ is converted into an initial-frequency estimation value (symbol shown in (12) below; the initial-frequency estimation value is represented as "fᵢ^" in the following description) to obtain an initial-frequency estimation value fᵢ^ of each LFM wave.

The initial-frequency estimation value fᵢ^ acquired by the initial frequency estimating unit 12c is acquired by the identification result output unit 14.

Note that the initial-frequency estimation value fᵢ^ may be temporarily stored in the storage unit 13. ${\hat{f}}_{i}$ (12)

On the other hand, when a plurality of sweep periods are included in the number of samples N₂ extracted from the digital reception signal, the initial-frequency estimation value fᵢ^ is obtained as follows.

That is, when the number of samples N₂ includes a plurality of sweep periods, peaks are obtained in a plurality of FRFTs.

When the peaks appearing in the plurality of FRFTs are converted into the frequency f on the basis of Expression (12), a frequency-difference estimation value (symbol shown in (13) below; the frequency-difference estimation value is represented as "Δfᵢ^(n)" in the following description) between the peak at the head and the n-th peak from the head is represented by Expression (14) below.$Δ {\hat{f}}_{i} \left(n\right) \left(i=1,2,..,\hat{{N}_{w}}\right)$ (13) $Δ {\hat{f}}_{i} \left(n\right) = \left(n-1\right) {\hat{μ}}_{i} {\hat{τ}}_{i}$ (14)

Therefore, the frequency-difference estimation value Δfᵢ^(n) expressed by Expression (14) is subtracted from frequency estimation values corresponding to the peaks appearing in the plurality of FRFTs, and an ensemble average of the subtracted values is obtained as the initial-frequency estimation value fᵢ^.

The identification result output unit 14 acquires the sweep-period estimation value τᵢ^ acquired by the sweep period estimating unit 12a and the chirp-rate estimation value µᵢ^ acquired by the chirp rate estimating unit 12b from the storage unit 13, acquires the initial-frequency estimation value fᵢ^ acquired by the initial frequency estimating unit 12c from the initial frequency estimating unit 12c, and outputs the sweep-period estimation value τᵢ^, the chirp-rate estimation value µᵢ^, and the initial-frequency estimation value fᵢ^, which are digital signals, to a display device 200 and a signal processing device 300 in the subsequent stage.

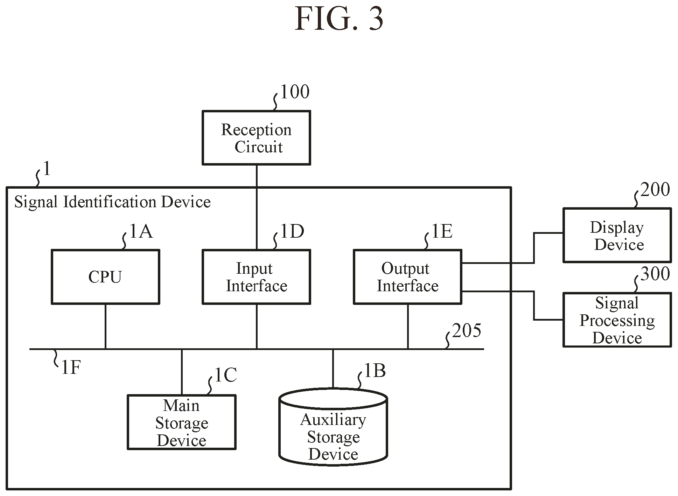

The signal identification device 1 according to the first embodiment is implemented by a hardware configuration of a computer, and includes a central processing unit (CPU) 1A including a microprocessor, a digital signal processor (DSP), or the like, an auxiliary storage device 1B including a large-capacity semiconductor memory (random access memory (RAM)), a main storage device 1C including a storage device (read only memory (ROM)) such as a non-volatile recording device, which is a hard disk device, an SSD device, or the like, an input interface 1D, an output interface 1E, and a signal path (bus) 1F as illustrated in FIG. 3.

The CPU 1A controls and manages the auxiliary storage device 1B, the main storage device 1C, the input interface 1D, and the output interface 1E.

The CPU 1A loads programs stored in the main storage device 1C into the auxiliary storage device 1B, and the CPU 1A executes various types of processing on the basis of the programs loaded into the auxiliary storage device 1B.

The CPU 1A acquires the sweep-period estimation value τᵢ^, the chirp-rate estimation value µᵢ^, and the initial-frequency estimation value fᵢ^ on the basis of the programs loaded in the auxiliary storage device 1B.

The signal path 1F is a bus that mutually connects the CPU 1A, the auxiliary storage device 1B, the main storage device 1C, the input interface 1D, and the output interface 1E.

Note that, although the signal identification device 1 is implemented by a hardware configuration of a computer, each of the reception processing unit 11, the signal identification unit 12, the storage unit 13, and the identification result output unit 14 which constitute the signal identification device 1 may be implemented by dedicated hardware.

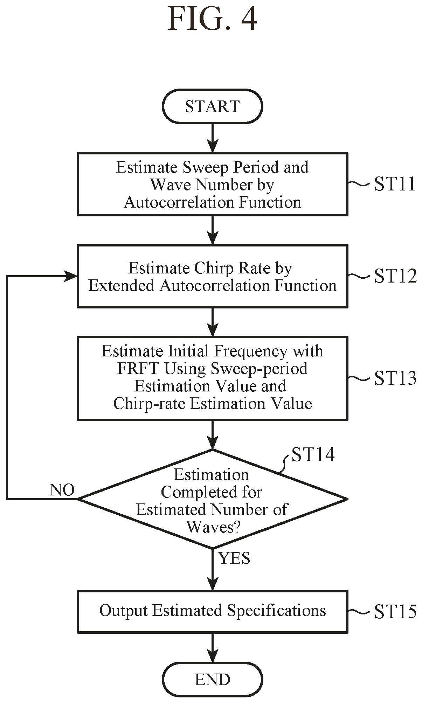

Next, an operation of the signal identification device 1 according to the first embodiment will be described with reference to FIG. 4.

In particular, a parameter identification method for identifying parameters of the LFM wave will be mainly described, the method including estimating the sweep period, the chirp rate, and the initial frequency of the LFM wave to acquire the sweep-period estimation value τᵢ^, the chirp-rate estimation value µᵢ^, and the initial-frequency estimation value fᵢ^.

In step ST11, the sweep period estimating unit 12a estimates a sweep period and wave number of the LFM wave in the digital reception signal from the reception processing unit 11 to acquire the sweep-period estimation value τᵢ^ and the wave-number estimation value Nw^.

That is, the sweep period estimating unit 12a extracts a digital signal with the number of samples N₀ from the digital reception signal (chirp signal), and calculates an autocorrelation function of the digital signal with the number of samples N₀.

On the basis of the calculated autocorrelation function, the sweep period estimating unit 12a one-dimensionally searches for a peak of the autocorrelation function to acquire the sweep-period estimation value τᵢ^ and the wave-number estimation value Nw^.

In step ST12, the chirp rate estimating unit 12b estimates a chirp rate that is a rate of change in frequency of the LFM wave in the digital reception signal.

In step ST12, the chirp rate estimating unit 12b estimates the chirp rate using the sweep-period estimation value τᵢ^ for each wave number i (= 1, 2,..., Nw^) indicated by the wave-number estimation value Nw^ acquired by the sweep period estimating unit 12a, and acquires the chirp-rate estimation value µᵢ^.

That is, first, the extended autocorrelation function Z_{L}[j] that is expressed in Expression (4) and that includes the sweep-period estimation value τ₁^ having a wave number of 1 acquired by the sweep period estimating unit 12a is obtained.

The chirp rate estimating unit 12b calculates the acquired extended autocorrelation function Z_{L}[j] for each candidate chirp rate µ₁, µ₂,..., µⱼ, one-dimensionally searches for a peak of the calculated extended autocorrelation function Z_{L}[j], and acquires a chirp-rate estimation value µ₁^ of each LFM wave in which the wave number is 1.

In step ST13, the initial frequency estimating unit 12c estimates an initial frequency of the LFM wave in the digital reception signal.

In step ST13, the initial frequency estimating unit 12c acquires the sweep-period estimation value τᵢ^ acquired by the sweep period estimating unit 12a and the chirp-rate estimation value µᵢ^ acquired by the chirp rate estimating unit 12b, and estimates the initial frequency by using one-dimensional FRFT using the sweep-period estimation value τᵢ^ and the chirp-rate estimation value µᵢ^.

In step ST13, first, for the wave number of 1 acquired by the sweep period estimating unit 12a, the initial frequency estimating unit 12c converts the chirp-rate estimation value µ₁^ into the FRFT order α₁ using Expression (7) that is a relational expression, and calculates FRFT represented by Expression (8).

The initial frequency estimating unit 12c one-dimensionally searches for a peak of FRFT represented by Expression (8) and acquires an argument u₁^ corresponding to the peak.

On the basis of Expression (9), the argument u₁^ is converted into an initial-frequency estimation value f₁^ to obtain an initial-frequency estimation value f₁^ of each LFM wave.

In step ST13, when the number of samples N₂ extracted from the digital reception signal includes a plurality of sweep periods, the frequency-difference estimation value Δf₁^(n) expressed by Expression (14) is subtracted from the frequency estimation values corresponding to the peaks appearing in the plurality of FRFTs, and an ensemble average of the subtracted values is obtained as the initial-frequency estimation value f₁^.

In step ST14, it is determined whether or not the initial frequency estimating unit 12c has acquired the initial-frequency estimation value fᵢ^ up to the wave-number estimation value Nw^.

If the initial frequency estimating unit 12c has now acquired the initial-frequency estimation value f₁^ for the wave number of 1, the processing returns to step ST12, and then proceeds to step ST13 to acquire an initial-frequency estimation value f₂^ for the wave number of 2.

The processes of steps ST12 to ST14 are repeated until the wave number reaches Nw^, and when the wave number reaches Nw^, the processing proceeds to step ST15.

In step ST15, the identification result output unit 14 outputs the sweep-period estimation value τᵢ^, the chirp-rate estimation value µᵢ^, and the initial-frequency estimation value fᵢ^ to the display device 200 and the signal processing device 300 in the subsequent stage, and ends the series of processing.

Note that, when the wave-number estimation value Nw^ estimated from the LFM wave in the digital reception signal from the reception processing unit 11 by the sweep period estimating unit 12a is zero in step ST11, steps ST12 to ST14 are skipped, and a series of processing is ended in step ST15.

The parameter identification method for identifying parameters of the LFM wave in steps ST11 to ST15 is performed by the CPU 1A executing processing according to a program stored in the main storage device 1C.

That is, the program stored in the main storage device 1C includes a procedure of estimating a sweep period in which the sweep of the LFM wave in the digital reception signal obtained by converting the incoming wave including the LFM wave into a digital signal is repeated, a procedure of estimating a chirp rate which is a rate of change in frequency of the LFM wave in the digital reception signal, and a procedure of estimating an initial frequency of the LFM wave in the digital reception signal.

The signal identification device 1 according to the first embodiment includes: a sweep period estimating unit 12a to estimate a sweep period in which a sweep of a linear frequency modulation (LFM) wave in a digital reception signal is repeated, the digital reception signal being obtained by converting an incoming wave including an LFM wave into a digital signal; a chirp rate estimating unit 12b to estimate a chirp rate that is a rate of change in frequency of the LFM wave in the digital reception signal, using a sweep-period estimation value τᵢ^ estimated by the sweep period estimating unit 12a; and an initial frequency estimating unit 12c to estimate an initial frequency of the LFM wave in the digital reception signal, using the sweep-period estimation value τᵢ^ estimated by the sweep period estimating unit 12a and a chirp-rate estimation value µᵢ^ estimated by the chirp rate estimating unit 12b. Therefore, even when the incoming wave includes a plurality of LFM waves having periodicity, the sweep period, the chirp rate, and the initial frequency, which are parameters of the LFM wave, can be estimated with a low amount of computation by a combination of one-dimensional search processes.

### Second Embodiment

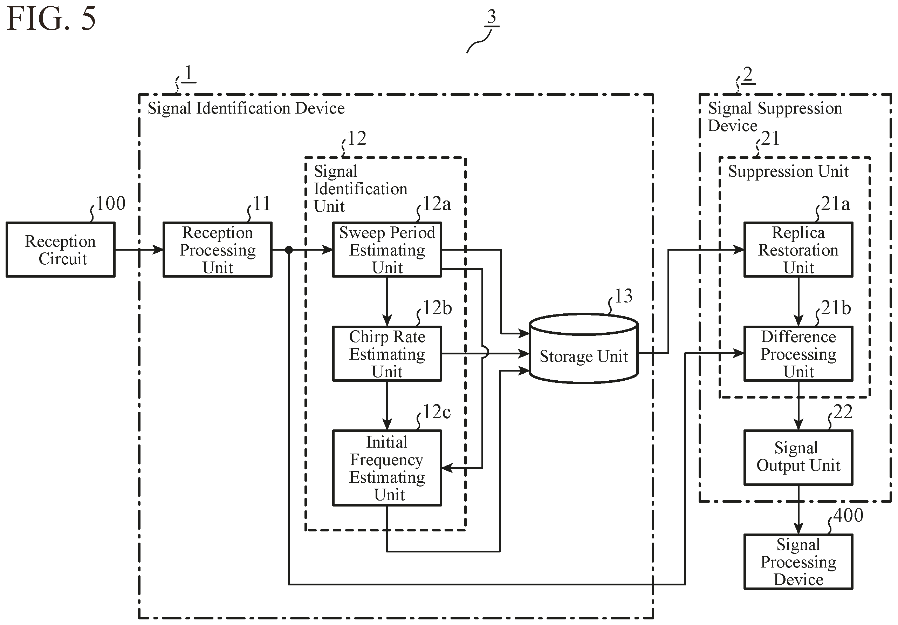

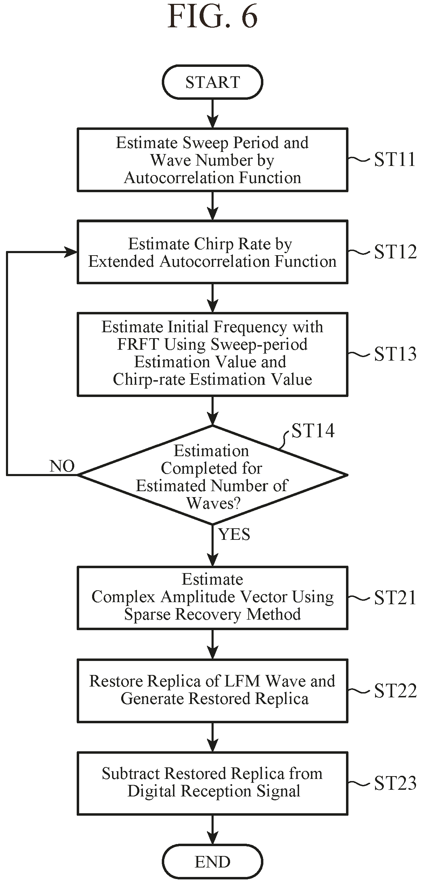

A signal identification and suppression device 3 according to a second embodiment will be described with reference to FIGS. 5 and 6.

The signal identification and suppression device 3 according to the second embodiment is different from the signal identification device 1 according to the first embodiment in that a signal suppression device 2 that performs processing of suppressing an unnecessary incoming wave is added to the signal identification device 1, and the other configurations are the same.

Note that, in FIGS. 5 and 6, the same reference numerals as in FIGS. 1 to 4 denote the same or corresponding portions.

The signal identification and suppression device 3 according to the second embodiment generates an incoming wave replica by the signal suppression device 2 using the sweep-period estimation value τᵢ^, the chirp-rate estimation value µᵢ^, and the initial-frequency estimation value fᵢ^ which have been acquired by the signal identification device 1 according to the first embodiment, subtracts the generated incoming wave replica from the digital reception signal from the reception processing unit 11, and outputs a digital reception signal in which the LFM wave in an unnecessary incoming wave is suppressed.

That is, the signal identification and suppression device 3 according to the second embodiment outputs a digital reception signal obtained by suppressing an unnecessary incoming wave from the digital reception signal from the reception processing unit 11.

The signal identification and suppression device 3 according to the second embodiment includes a signal identification device 1 and the signal suppression device 2.

The signal identification device 1 includes a reception processing unit 11, a signal identification unit 12, and a storage unit 13.

The reception processing unit 11, the signal identification unit 12, and the storage unit 13 in the signal identification device 1 are the same as the reception processing unit 11, the signal identification unit 12, and the storage unit 13 in the signal identification device 1 according to the first embodiment.

Note that, in the signal identification and suppression device 3, the sweep-period estimation value τᵢ^, the chirp-rate estimation value µᵢ^, and the initial-frequency estimation value fᵢ^ which have been acquired by the signal identification device 1 as parameters are not output to the display device 200 and the signal processing device 300 in the subsequent stage, and thus the identification result output unit 14 in the signal identification device 1 according to the first embodiment is not necessary.

In addition, the initial-frequency estimation value fᵢ^ acquired by the initial frequency estimating unit 12c in the signal identification unit 12 is stored in the storage unit 13.

In a case where it is necessary to output the sweep-period estimation value τᵢ^, the chirp-rate estimation value µᵢ^, and the initial-frequency estimation value fᵢ^ as parameters to the display device 200 and the signal processing device 300 in the subsequent stage, the identification result output unit 14 is provided.

The signal suppression device 2 includes a suppression unit 21 and a signal output unit 22.

The suppression unit 21 includes a replica restoration unit 21a and a difference processing unit 21b.

On the basis of the sweep-period estimation value τᵢ^, the chirp-rate estimation value µᵢ^, and the initial-frequency estimation value fᵢ^ which have been acquired by the signal identification device 1 and stored in the storage unit 13, the replica restoration unit 21a estimates the complex amplitude of the LFM wave in the digital reception signal from the reception processing unit 11 for the wave numbers indicated by the wave-number estimation value Nw^, acquires a complex amplitude vector corresponding to the estimated complex-amplitude estimation value, and restores a replica of the LFM wave.

The complex amplitude of the LFM wave is estimated using, for example, a sparse recovery method.

When orthogonal matching pursuit (OMP) is used, it is estimated as follows.

When using OMP, the replica restoration unit 21a solves an optimization problem expressed by Expression (16) below with a greedy algorithm to obtain a complex amplitude vector (symbol shown in (15) below; the obtained complex amplitude vector is represented as "x^" in the following description).$\hat{x}$ (15) $\hat{x} = {argmin}_{x} {\left‖y-Φx\right‖}_{2}^{2} + {\left‖x\right‖}_{0}$ (16)

y is an observation vector, Φ is a dictionary matrix, and x is an unknown complex amplitude vector.

Note that the observation vector y is a vector indicated by a digital signal with the number of samples N₄ extracted from the digital reception signal from the reception processing unit 11.

The dictionary matrix Φ is a matrix expressed by Expression (17) below using the sweep-period estimation value τᵢ^, the chirp-rate estimation value µᵢ^, and the initial-frequency estimation value fᵢ^ which have been acquired by the signal identification device 1.$Φ = \left[\begin{matrix}1 & ⋯ & 1 \\ ⋮ & ⋱ & ⋮ \\ {e}^{{jω}_{1} \left(n\right)} & ⋯ & {e}^{{jω}_{\hat{{N}_{w}}} \left(n\right)} \\ ⋮ & ⋱ & ⋮ \\ {e}^{{jω}_{1} \left({N}_{3}-1\right)} & ⋯ & {e}^{{jω}_{\hat{{N}_{w}}} \left({N}_{3}-1\right)}\end{matrix}\right]$ (17)

In Expression (17), N₃ is the number of samples extracted from the digital reception signal from the reception processing unit 11, and ωᵢ(n) is expressed by Expression (18) below.${ω}_{i} \left(n\right) = 2 π \left({f}_{IF}-\frac{{\hat{μ}}_{i} {\hat{τ}}_{i}}{2}\right) {nT}_{s} + π {\hat{μ}}_{i} mod {\left({nT}_{s}+\frac{\hat{f} {′}_{i}}{{\hat{μ}}_{i}},{\hat{τ}}_{i}\right)}^{2} + π {\hat{μ}}_{i} \left⌊\frac{{nT}_{s} + \hat{f} {′}_{i} / {\hat{μ}}_{j}}{{\hat{τ}}_{i}}\right⌋ {\hat{τ}}_{i}^{2}$ (18)

In Expression (18), symbols shown in (19) and (20) below are relative initial-frequency estimation values in the chirp band, fIF is an intermediate frequency, mod(·) indicated in the second term on the right side is a modulus operator, and [·] indicated in the third term on the right side is a floor function.

In the following description, the relative initial-frequency estimation value in the chirp band is referred to as "f'ᵢ^".$\hat{f} {′}_{i}$ (19) $\hat{f} {′}_{i} \left(i=1,2,..,\hat{{N}_{w}}\right)$ (20)

The relative initial-frequency estimation value f'ᵢ^ in the chirp band is calculated from the initial-frequency estimation value fᵢ^ using Expression (21) below.$\hat{f} {′}_{i} = {\hat{f}}_{i} - {f}_{IF} + \frac{{\hat{μ}}_{i} {\hat{τ}}_{i}}{2}$ (21)

For the wave numbers indicated by the wave-number estimation value Nw^ acquired by the sweep period estimating unit 12, the replica restoration unit 21a executes OMP iteration for each wave number i (= 1, 2,..., Nw^) to obtain a complex amplitude vector x^ corresponding to the complex-amplitude estimation value of each LFM wave.

The replica restoration unit 21a restores a replica of the LFM wave with Expression (23) below using the dictionary matrix Φ and the complex amplitude vector x^, and generates the restored replica (symbol shown in (22) below; the restored replica is represented as "γ^" in the following description) of the incoming wave.$\hat{γ}$ (22) $\hat{γ} = Φ \hat{x}$ (23)

Even if the dictionary matrix Φ includes a component of the LFM wave that is not included in the digital reception signal from the reception processing unit 11, the influence of the component can be suppressed, because the complex-amplitude estimation value corresponding to the component takes a very small value.

Here, a threshold may be provided for the complex-amplitude estimation value, and a replica having a complex-amplitude estimation value equal to or less than the threshold may be deleted from the dictionary matrix Φ.

The difference processing unit 21b subtracts the restored replica γ^ for the incoming wave generated by the replica restoration unit 21a from the digital reception signal from the reception processing unit 11 to obtain a digital reception signal in which the LFM wave in an unnecessary incoming wave is suppressed from the digital reception signal.

Since the digital reception signal acquired by the difference processing unit 21b is a digital reception signal in which an undesired LFM wave included in the digital reception signal from the reception processing unit 11, that is, an LFM wave in an unnecessary incoming wave, is suppressed, interference due to the undesired LFM wave can be suppressed.

The signal output unit 22 outputs the digital reception signal which has been acquired by the difference processing unit 21b and in which the LFM wave in the unnecessary incoming wave is suppressed to a signal processing device 400.

The signal suppression device 2 in the signal identification and suppression device 3 according to the second embodiment is also implemented by the hardware configuration of a computer illustrated in FIG. 3 together with the signal identification device 1 according to the first embodiment.

That is, the signal identification and suppression device 3 according to the second embodiment is implemented by the hardware configuration of a computer illustrated in FIG. 3.

The CPU 1A functions as the signal identification device 1 that acquires the sweep-period estimation value τᵢ^, the chirp-rate estimation value µᵢ^, and the initial-frequency estimation value fᵢ^ and functions as the signal suppression device 2 that acquires the digital reception signal in which the LFM wave is suppressed, on the basis of the program loaded in the auxiliary storage device 1B.

Note that, although the signal identification and suppression device 3 is implemented by the hardware configuration of a computer, each of the reception processing unit 11, the signal identification unit 12, the storage unit 13, and the identification result output unit 14 which constitute the signal identification device 1 and each of the suppression unit 21 and the signal output unit 22 which constitute the signal suppression device 2 may be implemented by dedicated hardware.

Next, an operation of the signal identification and suppression device 3 according to the second embodiment will be described with reference to FIG. 6.

Steps ST11 to ST14 indicate the operation of the signal identification device 1, and are the same as the operation of the signal identification device 1 according to the first embodiment, that is, steps ST11 to ST14 which constitute the parameter identification method.

In step ST21, the replica restoration unit 21a estimates the complex amplitude vector x^ with Expression (16) by complex amplitude estimation with the sparse recovery method using the sweep-period estimation value τᵢ^, the chirp-rate estimation value µᵢ^, and the initial-frequency estimation value fᵢ^ for the wave number of 1 to Nw^ acquired in step ST14 and stored in the storage unit 13.

In step ST21, before the complex amplitude vector x^ is estimated, the relative initial-frequency estimation value f'ᵢ^ shown in Expression (20), ωᵢ(n) shown in Expression (18), and the dictionary matrix Φ shown in Expression (17) using the sweep-period estimation value τᵢ^, the chirp-rate estimation value µᵢ^, and the initial-frequency estimation value fᵢ^ are acquired, and the complex amplitude vector x^ is estimated using the dictionary matrix Φ and the observation vector y which is a vector indicated by the digital signal of the number of samples N₄ extracted from the digital reception signal from the reception processing unit 11.

The process of step ST21 is executed for each wave number i (= 1, 2,..., Nw^) indicated by the wave-number estimation value Nw^ acquired by the sweep period estimating unit 12 to obtain a complex amplitude vector x^ corresponding to the complex-amplitude estimation value of each LFM wave.

Step ST21 is a step for estimating the complex amplitude vector x^ by the replica restoration unit 21a.

In step ST22, the replica restoration unit 21a restores a replica of the LFM wave with Expression (23) using the dictionary matrix Φ and the complex amplitude vector x^ to generate the restored replica γ^ of the incoming wave.

Step ST22 is a step for generating the restored replica γ^ by the replica restoration unit 21a.

In step ST23, the difference processing unit 21b subtracts the restored replica γ^ for the incoming wave generated by the replica restoration unit 21 from the digital reception signal from the reception processing unit 11 to obtain a digital reception signal in which the LFM wave in the unnecessary incoming wave is suppressed from the digital reception signal.

Since the digital reception signal acquired by the difference processing unit 21b is a digital reception signal in which an undesired LFM wave included in the digital reception signal from the reception processing unit 11, that is, an LFM wave in an unnecessary incoming wave, is suppressed, interference due to the undesired LFM wave can be suppressed.

Step ST23 is a step for obtaining, by the difference processing unit 21b, a digital reception signal in which an LFM wave in an unnecessary incoming wave is suppressed from the digital reception signal.

The digital reception signal which has been acquired by the difference processing unit 21b and in which the LFM wave is suppressed is output to the signal processing device 400 from the signal output unit 22.

Steps ST21 to ST23 constitute a method for suppressing the LFM wave in the unnecessary incoming wave.

A reception signal acquisition method for acquiring a digital reception signal in which an LFM wave in an unnecessary incoming wave is suppressed is constituted by steps ST11 to ST14 and steps ST21 to ST23 together with the parameter identification method indicated in steps ST11 to ST14.

The method for suppressing the LFM wave in the unnecessary incoming wave in steps ST21 to ST23 is performed by the CPU 1A executing processing according to an LFM wave suppression program stored in the main storage device 1C.

That is, the LFM wave suppression program stored in the main storage device 1C includes: a procedure of generating a restored replica for an incoming wave by complex amplitude estimation using a sparse recovery method on the basis of a sweep-period estimation value obtained by estimating a sweep period in which a sweep of a linear frequency modulation (LFM) wave in a digital reception signal obtained by converting an incoming wave including the LFM wave into a digital signal is repeated, a chirp-rate estimation value obtained by estimating a chirp rate that is a rate of change in frequency of the LFM wave in the digital reception signal, and an initial-frequency estimation value obtained by estimating an initial frequency of the LFM wave in the digital reception signal; and a procedure of subtracting the generated restored replica for the incoming wave from the digital reception signal to obtain a digital reception signal in which the LFM wave in an unnecessary incoming wave is suppressed.

The signal suppression device 2 in the signal identification and suppression device 3 according to the second embodiment includes: a replica restoration unit 21a that generates a restored replica for an incoming wave by complex amplitude estimation using a sparse recovery method on the basis of the sweep-period estimation value, the chirp-rate estimation value, and the initial-frequency estimation value which have been acquired by the signal identification device 1; and a difference processing unit 21b that subtracts the restored replica for the incoming wave generated by the replica restoration unit 21a from the digital reception signal from the reception processing unit 11 to obtain a digital reception signal in which the LFM wave in an unnecessary incoming wave is suppressed. Therefore, even when the incoming wave includes a plurality of LFM waves having periodicity, the signal suppression device 2 suppresses the undesired LFM wave included in the digital reception signal from the reception processing unit 11 with a low amount of computation while suppressing distortion of the desired digital reception signal in the digital reception signal from the reception processing unit 11, that is, the signal suppression device 2 can obtain a digital reception signal in which an LFM wave in an unnecessary incoming wave is suppressed. Thus, interference due to an undesired LFM wave can be suppressed.

### Third Embodiment

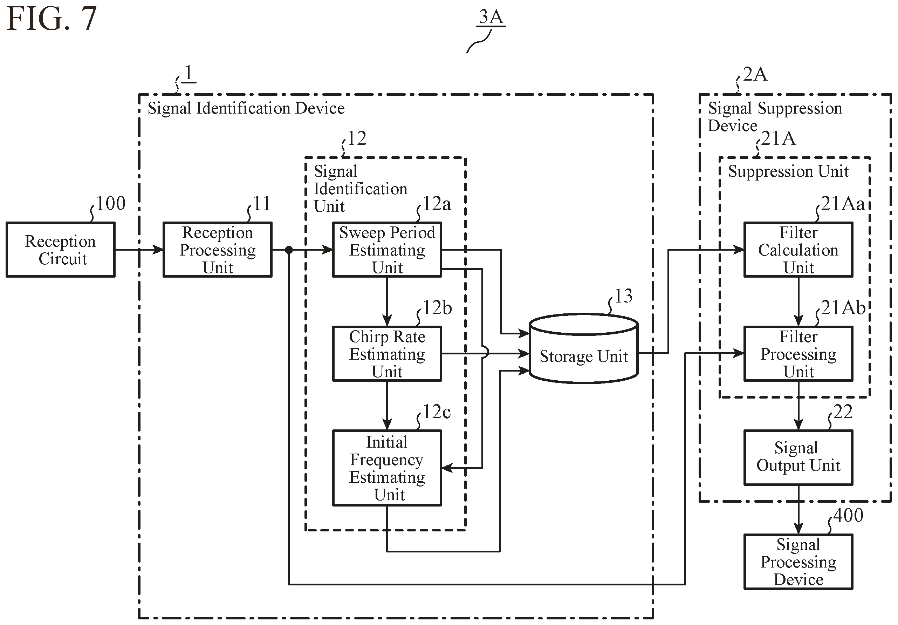

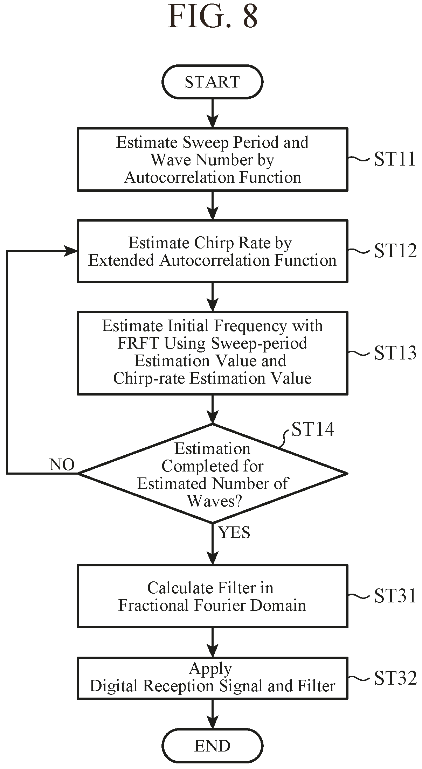

A signal identification and suppression device 3A according to a third embodiment will be described with reference to FIGS. 7 and 8.

The signal identification and suppression device 3A according to the third embodiment is different from the signal identification device 1 according to the first embodiment in that a signal suppression device 2A that performs processing of suppressing an unnecessary incoming wave is added to the signal identification device 1, and the other configurations are the same.

Note that, in FIGS. 7 and 8, the same reference numerals as in FIGS. 1 to 4 denote the same or corresponding portions.

The signal identification and suppression device 3A according to the third embodiment calculates, by the signal suppression device 2A, a filter using the sweep-period estimation value τᵢ^, the chirp-rate estimation value µᵢ^, and the initial-frequency estimation value fᵢ^ which have been acquired by the signal identification device 1 according to the first embodiment, executes filter processing for a digital reception signal from the reception processing unit 11, and outputs a digital reception signal in which the LFM wave in an unnecessary incoming wave is suppressed.

That is, the signal identification and suppression device 3A according to the third embodiment outputs a digital reception signal obtained by suppressing an unnecessary incoming wave from the digital reception signal from the reception processing unit 11.

The signal identification and suppression device 3A according to the third embodiment includes a signal identification device 1 and the signal suppression device 2A.

The signal identification device 1 includes a reception processing unit 11, a signal identification unit 12, and a storage unit 13.

The reception processing unit 11, the signal identification unit 12, and the storage unit 13 in the signal identification device 1 are the same as the reception processing unit 11, the signal identification unit 12, and the storage unit 13 in the signal identification device 1 according to the first embodiment.

Note that, in the signal identification and suppression device 3A, the sweep-period estimation value τᵢ^, the chirp-rate estimation value µᵢ^, and the initial-frequency estimation value fᵢ^ which have been acquired by the signal identification device 1 as parameters are not output to the display device 200 and the signal processing device 300 in the subsequent stage, and thus the identification result output unit 14 in the signal identification device 1 according to the first embodiment is not necessary.

In addition, the initial-frequency estimation value fᵢ^ acquired by the initial frequency estimating unit 12c in the signal identification unit 12 is stored in the storage unit 13.

In a case where it is necessary to output the sweep-period estimation value τᵢ^, the chirp-rate estimation value µᵢ^, and the initial-frequency estimation value fᵢ^ as parameters to the display device 200 and the signal processing device 300 in the subsequent stage, the identification result output unit 14 is provided.

The signal suppression device 2A includes a suppression unit 21A and a signal output unit 22.

The suppression unit 21A includes a filter calculation unit 21Aa and a filter processing unit 21Ab.

The filter calculation unit 21Aa calculates a filter in the fractional Fourier domain for the wave number indicated by the wave-number estimation value Nw^ on the basis of the sweep-period estimation value τᵢ^, the chirp-rate estimation value µᵢ^, and the initial-frequency estimation value fᵢ^ which have been acquired by the signal identification device 1 and which have been stored in the storage unit 13.

As the filter calculated by the filter calculation unit 21Aa, a notch filter can be used, for example.

The notch filter is obtained by performing one-dimensional FRFT on digital reception data based on the sweep-period estimation value τᵢ^, the chirp-rate estimation value µᵢ^, and the initial-frequency estimation value fᵢ^, then one-dimensionally searching for a peak of the FRFT, and calculating a notch filter that forms a null in an argument uᵢ corresponding to the peak.

The filter processing unit 21Ab converts the digital reception signal from the reception processing unit 11 into a fractional Fourier domain, and applies the filter calculated by the filter calculation unit 21Aa to the reception signal converted into the fractional Fourier domain in the FRFD domain to obtain a digital reception signal in which the LFM wave in an unnecessary incoming wave is suppressed.

That is, the filter processing unit 21Ab applies the filter calculated by the filter calculation unit 21Aa to the digital reception signal from the reception processing unit 11, and then applies inverse fractional Fourier transform (IFRFT) to obtain a filtered digital reception signal.

IFRFT corresponds to processing of inverting the sign of the order αᵢ of FRFT and applying FRFT in Expression (8) described above.

Since the digital reception signal acquired by the filter processing unit 21Ab is a digital reception signal in which an undesired LFM wave included in the digital reception signal from the reception processing unit 11, that is, an LFM wave in an unnecessary incoming wave, is suppressed, interference due to the undesired LFM wave can be suppressed.

The signal output unit 22 outputs the digital reception signal which has been acquired by the filter processing unit 21Ab and in which the LFM wave in the unnecessary incoming wave is suppressed to a signal processing device 400.

The signal suppression device 2A in the signal identification and suppression device 3 according to the third embodiment is also implemented by the hardware configuration of a computer illustrated in FIG. 3 together with the signal identification device 1 according to the first embodiment.

That is, the signal identification and suppression device 3A according to the third embodiment is implemented by the hardware configuration of a computer illustrated in FIG. 3.

The CPU 1A functions as the signal identification device 1 that acquires the sweep-period estimation value τᵢ^, the chirp-rate estimation value µᵢ^, and the initial-frequency estimation value fᵢ^ and functions as the signal suppression device 2A that acquires the digital reception signal in which the LFM wave is suppressed, on the basis of the program loaded in the auxiliary storage device 1B.

Note that, although the signal identification and suppression device 3A is implemented by the hardware configuration of a computer, each of the reception processing unit 11, the signal identification unit 12, the storage unit 13, and the identification result output unit 14 which constitute the signal identification device 1 and each of the suppression unit 21A and the signal output unit 22 which constitute the signal suppression device 2 may be implemented by dedicated hardware.

Next, an operation of the signal identification and suppression device 3A according to the third embodiment will be described with reference to FIG. 8.

Steps ST11 to ST14 indicate the operation of the signal identification device 1, and are the same as the operation of the signal identification device 1 according to the first embodiment, that is, steps ST11 to ST14.

In step ST31, the filter calculation unit 21Aa calculates a filter, for example, a notch filter in the fractional Fourier domain, using the sweep-period estimation value τᵢ^, the chirp-rate estimation value µᵢ^, and the initial-frequency estimation value fᵢ^ for the wave number of 1 to Nw^ acquired in step ST14 and stored in the storage unit 13.

Step ST31 is a step for calculating a filter in the fractional Fourier domain by the filter calculation unit 21Aa.

In step ST32, the filter processing unit 21Ab applies the filter calculated by the filter calculation unit 21Aa to the digital reception signal from the reception processing unit 11 to obtain a digital reception signal in which the LFM wave in the unnecessary incoming wave is suppressed.

In step ST32, in the fractional Fourier domain, the filter calculated by the filter calculation unit 21Aa is applied to the digital reception signal from the reception processing unit 11 and IFRFT is executed, by which a digital reception signal in which the LFM wave in the unnecessary incoming wave is suppressed is obtained.

Step ST32 is a step for obtaining, by the filter processing unit 21Ab, a digital reception signal in which an LFM wave in an unnecessary incoming wave is suppressed from the digital reception signal.

The digital reception signal which has been acquired by the filter processing unit 21Ab and in which the LFM wave is suppressed is output to the signal processing device 400 from the signal output unit 22.

Steps ST31 and ST32 constitute a method for suppressing the LFM wave in the unnecessary incoming wave.

A reception signal acquisition method for acquiring a digital reception signal in which an LFM wave in an unnecessary incoming wave is suppressed is constituted by steps ST11 to ST14 and steps ST31 to ST32 together with the parameter identification method indicated in steps ST11 to ST14.

The method for suppressing the LFM wave in the unnecessary incoming wave in steps ST31 and ST32 is performed by the CPU 1A executing processing according to the LFM wave suppression program stored in the main storage device 1C.

That is, the LFM wave suppression program stored in the main storage device 1C includes: a procedure of calculating a filter in the fractional Fourier domain on the basis of a sweep-period estimation value obtained by estimating a sweep period in which a sweep of a linear frequency modulation (LFM) wave in a digital reception signal obtained by converting an incoming wave including the LFM wave into a digital signal is repeated, a chirp-rate estimation value obtained by estimating a chirp rate that is a rate of change in frequency of the LFM wave in the digital reception signal, and an initial-frequency estimation value obtained by estimating an initial frequency of the LFM wave in the digital reception signal; and a procedure of applying the filter to the digital reception signal in the fractional Fourier domain to obtain a digital reception signal in which the LFM wave in the unnecessary incoming wave is suppressed.

The signal suppression device 2A in the signal identification and suppression device 3A according to the third embodiment includes: a filter calculation unit 21Aa that calculates a filter in a fractional Fourier domain on the basis of the sweep-period estimation value, the chirp-rate estimation value, and the initial-frequency estimation value which have been acquired by the signal identification device 1; and a filter processing unit 21Ab that applies the filter calculated by the filter calculation unit 21Aa to the digital reception signal from the reception processing unit 11 to obtain a digital reception signal in which the LFM wave in an unnecessary incoming wave is suppressed. Therefore, even when the incoming wave includes a plurality of LFM waves having periodicity, the signal suppression device 2A suppresses the undesired LFM wave included in the digital reception signal from the reception processing unit 11 with a low amount of computation while suppressing distortion of the desired digital reception signal in the digital reception signal from the reception processing unit 11, that is, the signal suppression device 2A can obtain a digital reception signal in which an LFM wave in an unnecessary incoming wave is suppressed. Thus, interference due to an undesired LFM wave can be suppressed.

Note that it is possible to freely combine the embodiments, modify any of the components of the embodiments, or omit any of the components in the embodiments.

### INDUSTRIAL APPLICABILITY

In a wireless communication field in which an LFM signal also known as a chirp signal is used, the embodiments are applied to a signal identification device that estimates and identifies a parameter of an LFM wave, and a signal identification and suppression device that outputs a digital reception signal obtained by suppressing an unnecessary incoming wave from a digital reception signal based on an incoming wave.

### REFERENCE SIGNS LIST

1: signal identification device, 2, 2A: signal suppression device, 3, 3A: signal identification and suppression device, 11: reception processing unit, 12: signal identification unit, 12a: sweep period estimating unit, 12b: chirp rate estimating unit, 12c: initial frequency estimating unit, 13: storage unit, 14: identification result output unit, 21, 21A: suppression unit, 21a: replica restoration unit, 21b: difference processing unit, 21Aa: filter calculation unit, 21Ab: filter processing unit, 22: signal output unit

## Claims

1. A signal identification device comprising:
a sweep period estimating unit to estimate a sweep period in which a sweep of a linear frequency modulation (LFM) wave in a digital reception signal is repeated, the digital reception signal being obtained by converting an incoming wave including the linear frequency modulation (LFM) wave into a digital signal;
a chirp rate estimating unit to estimate a chirp rate that is a rate of change in frequency of the LFM wave in the digital reception signal; and
an initial frequency estimating unit to estimate an initial frequency of the LFM wave in the digital reception signal.

2. The signal identification device according to claim 1, wherein the sweep period estimating unit estimates the sweep period by calculating an autocorrelation function of the LFM wave in the digital reception signal and using the calculated autocorrelation function.

3. The signal identification device according to claim 1, wherein the chirp rate estimating unit estimates the chirp rate using an extended autocorrelation function incorporating the sweep period estimated by the sweep period estimating unit.

4. The signal identification device according to any one of claims 1 to 3, wherein the initial frequency estimating unit estimates the initial frequency by one-dimensional fractional Fourier transform (FRFT) using the sweep period estimated by the sweep period estimating unit and the chirp rate estimated by the chirp rate estimating unit.

5. A signal suppression device comprising:
a replica restoration unit to generate a restored replica for an incoming wave by complex amplitude estimation using a sparse recovery method on a basis of a sweep-period estimation value obtained by estimating a sweep period in which a sweep of a linear frequency modulation (LFM) wave in a digital reception signal is repeated, the digital reception signal being obtained by converting an incoming wave including the linear frequency modulation (LFM) wave into a digital signal, a chirp-rate estimation value obtained by estimating a chirp rate that is a rate of change in frequency of the LFM wave in the digital reception signal, and an initial-frequency estimation value obtained by estimating an initial frequency of the LFM wave in the digital reception signal; and
a difference processing unit to subtract the restored replica for the incoming wave that has been generated by the replica restoration unit from the digital reception signal to obtain a digital reception signal in which the LFM wave in an unnecessary incoming wave is suppressed.

6. The signal suppression device according to claim 5, wherein the complex amplitude estimation in the replica restoration unit is performed by orthogonal matching tracking.

7. A signal suppression device comprising:
a filter calculation unit to calculate a filter in a fractional Fourier domain on a basis of a sweep-period estimation value obtained by estimating a sweep period in which a sweep of a linear frequency modulation (LFM) wave in a digital reception signal is repeated, the digital reception signal being obtained by converting an incoming wave including the linear frequency modulation (LFM) wave into a digital signal, a chirp-rate estimation value obtained by estimating a chirp rate that is a rate of change in frequency of the LFM wave in the digital reception signal, and an initial-frequency estimation value obtained by estimating an initial frequency of the LFM wave in the digital reception signal; and
a filter processing unit to apply the filter that has been calculated by the filter calculation unit to the digital reception signal to obtain a digital reception signal in which the LFM wave in an unnecessary incoming wave is suppressed.

8. A signal identification and suppression device comprising:
the signal identification device according to any one of claims 1 to 4; and
the signal suppression device according to any one of claims 5 to 7.

9. A parameter identification method for identifying a parameter of a linear frequency modulation (LFM) wave by a signal identification device including a sweep period estimating unit, a chirp rate estimating unit, and an initial frequency estimating unit, the method comprising steps of:
by the sweep period estimating unit, estimating a sweep period in which a sweep of an LFM wave in a digital reception signal is repeated, the digital reception signal being obtained by converting an incoming wave including the LFM wave into a digital signal;
by the chirp rate estimating unit, estimating a chirp rate that is a rate of change in frequency of the LFM wave in the digital reception signal; and
by the initial frequency estimating unit, estimating an initial frequency of the LFM wave in the digital reception signal.

10. A parameter identification program for identifying a parameter of a linear frequency modulation (LFM) wave, the program causing a computer to execute procedures of:
estimating a sweep period in which a sweep of an LFM wave in a digital reception signal is repeated, the digital reception signal being obtained by converting an incoming wave including the LFM wave into a digital signal;
estimating a chirp rate that is a rate of change in frequency of the LFM wave in the digital reception signal; and
estimating an initial frequency of the LFM wave in the digital reception signal.

11. A recording medium storing a parameter identification program for identifying a parameter of a linear frequency modulation (LFM) wave, the program causing a computer to execute procedures of:
estimating a sweep period in which a sweep of an LFM wave in a digital reception signal is repeated, the digital reception signal being obtained by converting an incoming wave including the LFM wave into a digital signal;
estimating a chirp rate that is a rate of change in frequency of the LFM wave in the digital reception signal; and
estimating an initial frequency of the LFM wave in the digital reception signal.
